# EUROPEAN PATENT APPLICATION

(11) **EP 3 211 843 A1**
(43) Date of publication of application: **30.08.2017**
(21) Application number: 15852883.6
(22) Date of filing: 10.04.2015
(51) Int. Cl.: H04L 12/931

(54) **TABLE LOOK-UP METHOD AND DEVICE FOR OPENFLOW TABLE, AND STORAGE MEDIUM**

(30) Priority: 21.10.2014 CN 201410562760
(71) Applicant: ZTE Corporation, Shenzhen, Guangdong 518057 (CN)
(72) Inventor: NIU, Guangping, Shenzhen Guangdong 518057 (CN)
(74) Representative: Lavoix
(86) International application number: PCT/CN2015/076316
(87) International publication number: WO 2016/062031

(57) **Abstract**

Disclosed is a table look-up method for an openflow table, in which on a control plane, openflow tables are divided into accurate matching flow tables and at least one classification matching flow table in accordance with keyword fields; flow table configuration information is issued into the accurate matching flow tables or the classification matching flow table and on a forwarding plane, table look-up on the accurate matching flow tables is conducted using all keywords of a packet, and when a matched table entry is found, packet processing is conducted in accordance with the action of the table entry, and when the matched table entry is not found, keywords of different keyword fields of the packet are extracted to conduct parallel table look-up on the at least one classification matching flow table, a table entry of an accurate matching flow table is dynamically established, and packet processing is conducted.

## Description

### TECHNICAL FIELD

The present disclosure generally relates to the field of the Ethernet data communication, and more particularly to a table look-up method, device for an openflow table and storage medium.

### BACKGROUND

With the rise of the Software Defined Network (SDN), openflow as a mainstream technique of the SDN has been widely researched. The openflow standard has become increasingly mature and is accepted and approved by device manufactures and operators. However, as a newly emerging technique, the openflow techinique encounters a huge challenge at both a forwarding plane and a control plane and has a relatively greater number of technical bottlenecks in practice, which may prevent its further promotion and application.

At least the following major problems exist at the forwarding plane.
1. In order to cover more complex services and meet service expansion requirements, the openflow techinique proposes a concept of multiple levels of flow tables and does not limit the number of levels of the flow tables. For each packet, the flow table look-up may be performed for multiple times by using various keywords, or a look-up result of a higher level flow table may be taken as keywords for a subsequent flow table look-up. This may cause an increased design complexity and a decreased forwarding performance.
2. The openflow standard specifies that a flow table may be used for table look-up with a combination of arbitrary keyword fields. Currently, a mainstream method is to implement the flow table using a Ternary Content Addressable Memory (TCAM) chip. Since a large number of the keyword fields are defined in the openflow standard, in case that all of the keywords are considered, a 576-bit key is required to indicate one table entry and thus a 36M-bit TCAM chip may store 64K table entries at most, which may hardly meet requirements of the industry. Furthermore, TCAM chips are expensive resources and it is not realistic to implement a flow table merely by a TCAM chip.

### SUMMARY

In order to solve the technical problems at present, in the embodiments of the disclosure, it is desired to provide a table look-up method, device for an openflow table and storage medium.

The technical solutions of the embodiments of the disclosure are implemented as follows.

In an embodiment of the disclosure, a table look-up method for an openflow table is provided, and the method includes the following steps. At a control plane, openflow tables of each level are divided into a precise matching flow table and at least one classification matching flow table based on keyword fields. Flow table configuration information issued by an openflow controller is received. The flow table configuration information is issued as a table entry into the precise matching flow table or the classification matching flow table based on keyword fields of the flow table configuration information. At a forwarding plane, the precise matching flow table is looked up for a matched table entry, by using all keywords in a packet. When the matched table entry is found, the packet is processed according to an action of the matched table entry. When the matched table entry is not found, keywords of different keyword fields of the packet are extracted to look up the at least one classification matching flow table in parallel. A table entry of the precise matching flow table is dynamically established based on a look-up result of the at least one classification matching flow table. The packet is processed according to an action of the dynamically established table entry.

In another embodiment of the disclosure, a table look-up device for an openflow table is provided, and the device includes a control plane module, and a forwarding plane module. The control plane module is arranged to divide, based on keyword fields, openflow tables of each level into a precise matching flow table and at least one classification matching flow table; receive flow table configuration information issued by an openflow controller; and issue, based on keyword fields of the flow table configuration information, the flow table configuration information as a table entry into the precise matching flow table or the classification matching flow table. The forwarding plane module is arranged to look up the precise matching flow table for a matched table entry, by using all keywords in a packet; when the matched table entry is found, process the packet according to an action of the matched table entry; and when the matched table entry is not found, extract keywords of different keyword fields of the packet to look up the at least one classification matching flow table in parallel, dynamically establish a table entry of the precise matching flow table based on a look-up result of the at least one classification matching flow table, and process the packet according to an action of the dynamically established table entry.

In yet another embodiment of the disclosure, a computer storage medium is provided, storing computer programs adapted to perform the table look-up method for the openflow table described above.

The disclosure provides a table look-up method, device for an openflow table and storage medium. At the control plane, openflow tables of each level are divided into a precise matching flow table and at least one classification matching flow table based on keyword fields. Flow table configuration information issued by an openflow controller is received. The flow table configuration information is issued as a table entry into the precise matching flow table or the classification matching flow table based on keyword fields of the flow table configuration information,. At a forwarding plane, the precise matching flow table is looked up for a matched table entry, by using all keywords in a packet. When the matched table entry is found, the packet is processed according to an action of the matched table entry. When the matched table entry is not found, keywords of different keyword fields of the packet are extracted to look up the at least one classification matching flow table in parallel. A table entry of the precise matching flow table is dynamically established based on a look-up result of the at least one classification matching flow table. The packet is processed according to an action of the dynamically established table entry. In this way, when the packet is forwarded subsequently, the packet may be forwarded by directly looking up the precise matching flow table only once. Furthermore, the precise matching flow table may be implemented in a Dynamic Random Access Memory (DRAM), and is not necessarily implemented in a TCAM chip, which saves the TCAM chip resources.

### BRIEF DESCRIPTION OF THE DRAWINGS

Fig. 1 is a schematic diagram of a process for implementing a table look-up method for an openflow table according to an embodiment of the disclosure;
Fig. 2 is a plane schematic diagram for implementing a table look-up method for an openflow table according to an embodiment of the disclosure;
Fig. 3 is a schematic diagram of a specific process of step 102 of the embodiment of the disclosure;
Fig. 4 is a schematic diagram of a specific process of step 103 of the embodiment of the disclosure; and
Fig. 5 is a structural schematic diagram of a table look-up device for an openflow table according to an embodiment of the disclosure.

### DEATIALED DESCRIPTION

According to an embodiment, at a control plane, openflow tables of each level are divided into a precise matching flow table and at least one classification matching flow table based on keyword fields. Flow table configuration information issued by an openflow controller is received. The flow table configuration information is issued as a table entry into the precise matching flow table or the classification matching flow table based on keyword fields of the flow table configuration information. At a forwarding plane, the precise matching flow table is looked up for a matched table entry, by using all keywords in a packet. When the matched table entry is found, the packet according is processed according to an action of the matched table entry. When the matched table entry is not found, keywords of different keyword fields of the packet are extracted to look up the at least one classification matching flow table in parallel. A table entry of the precise matching flow table is dynamically established based on a look-up result of the at least one classification matching flow table. The packet is processed according to an action of the dynamically established table entry.

The disclosure will be described in detail in conjunction with the appended drawings and the embodiments.

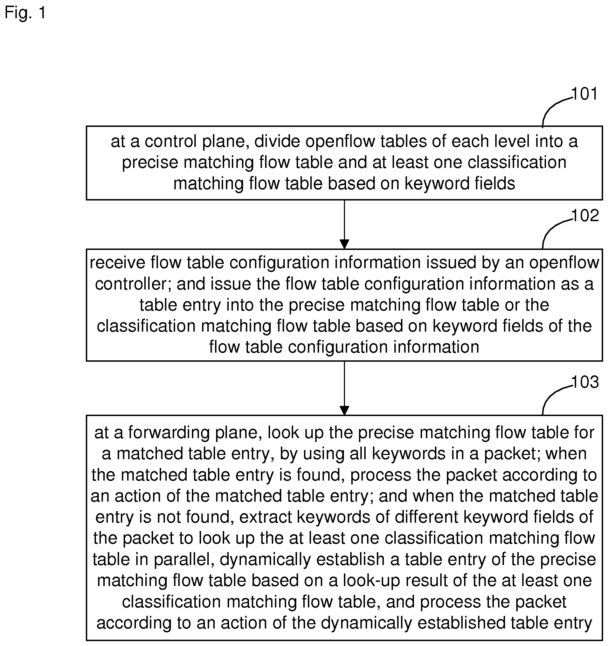

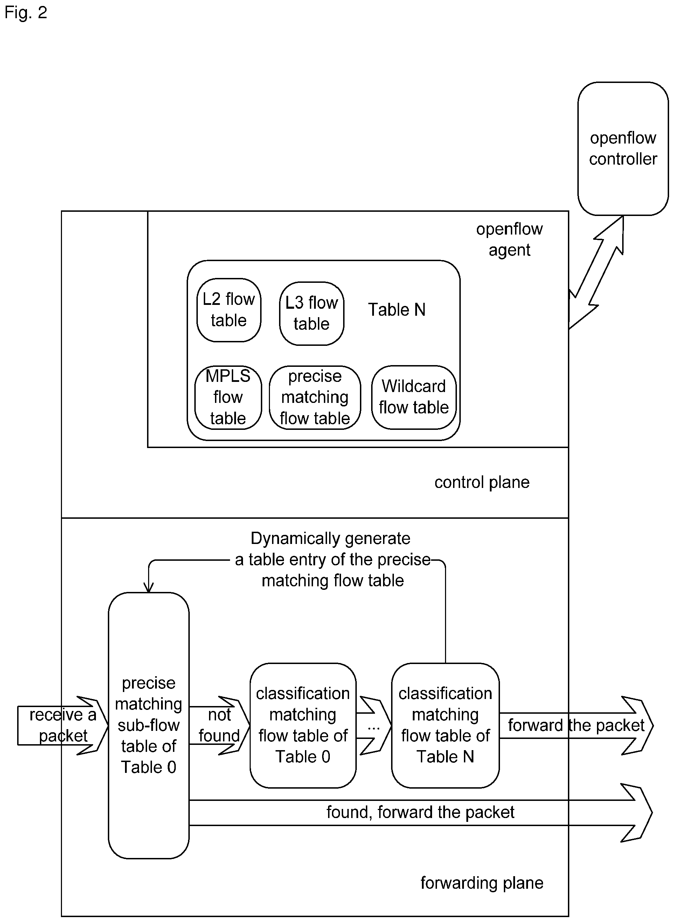

An embodiment of the disclosure provides a table look-up method for an openflow table. As shown in Fig. 1 and Fig. 2, the method includes the following steps.

In step 101, at a control plane, openflow tables of each level are divided into a precise matching flow table and at least one classification matching flow table based on keyword fields.

Herein, the at least one classification matching flow table may include: a layer 2 (L2) flow table, a layer 3 (L3) flow table, a Multiple Protocol Label Switch (MPLS) flow table, a Wildcard flow table and the like.

The L2 flow table stores flow table configuration information related to L2 basic services. The look-up keywords of table entries include a VLAN ID, a source MAC, a destination MAC and the like.

The L3 flow table stores flow table configuration information related to L3 basic services. The look-up keywords of table entries include a Virtual Local Area Network Identifier (VLAN ID), a source IP, a destination IP and the like.

The MPLS flow table stores flow table configuration information related to MPLS basic services. The look-up keywords of table entries include an MPLS mask.

The precise matching flow table stores related flow table configuration information precisely matched with all keyword table entries defined by the openflow 1.x.

The precise matching flow table stores, in a DRAM, the issued flow table configuration information and the dynamically established table entries simultaneously, in a form of an HASH table. In practice, the number of the dynamically established table entries will be huge, and the precise matching flow table generally requires defining a table of not less than 4M items.

The Wildcard flow table stores flow table configuration information other than the above-described four types of flow tables. The Wildcard flow table takes all keywords defined by the openflow 1.x as a key to perform non-precise matching. The mask may be configured in any field, and may be stored in the TCAM.

In step 102, flow table configuration information issued by an openflow controller is received. The flow table configuration information is issued as a table entry into the precise matching flow table or the classification matching flow table based on keyword fields of the flow table configuration information.

Specially, an openflow agent receives the flow table configuration information issued by the openflow controller. The openflow agent issues flow table configuration information with keyword fields precisely matched with all keywords, as a table entry of the precise matching flow table, to the precise matching flow table; issues flow table configuration information with keyword fields merely matched with an L2 basic service, as a table entry of the L2 flow table, to the L2 flow table; issues flow table configuration information with keyword fields merely matched with an L3 basic service, as a table entry of the L3 flow table, to the L3 flow table; issues flow table configuration information with keyword fields merely matched with an MPLS service, as a table entry of the MPLS flow table, to the MPLS flow table; and issues other flow table configuration information as a table entry of the Wildcard flow table, to the Wildcard flow table.

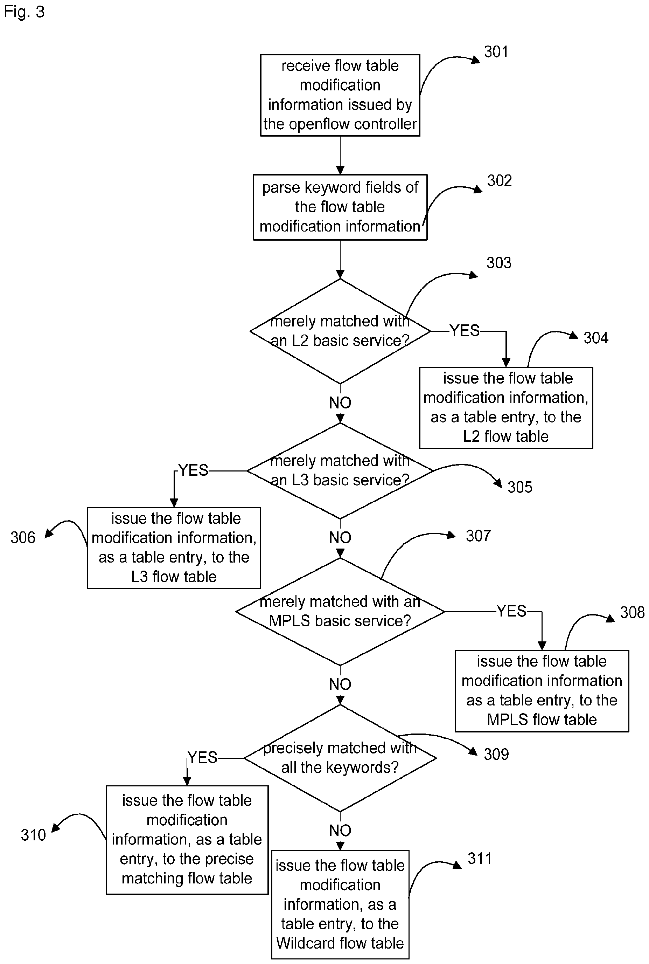

As shown in Fig. 3, specially, this step include the following steps.

In step 301, the openflow agent receives flow table modification information issued by the openflow controller.

In step 302, the openflow agent parses keyword fields of the flow table modification information.

In step 303, it is judged whether the keyword fields are merely matched with an L2 basic service. If yes, step 304 is performed; otherwise, step 305 is performed.

In step 304, the flow table modification information is issued, as a table entry, to the L2 flow table.

Specially, table look-up is performed in the L2 flow table based on the keyword fields of the flow table modification information. When a matched table entry is found in the L2 flow table, an operation including addition, deletion or modification, is performed on the found table entry, based on the action of the flow table modification information. When no matched table entry is found in the L2 flow table, a message indicating that the flow table does not exist, is fed back to the openflow controller.

In step 305, it is judged whether the keyword fields are merely matched with an L3 basic service. If yes, step 306 is performed; otherwise, step 307 is performed.

In step 306, the flow table modification information is issued, as a table entry, to the L3 flow table.

Specially, table look-up is performed in the L3 flow table based on the keyword fields of the flow table modification information. When a matched table entry is found in the L3 flow table, an operation including addition, deletion or modification, is performed on the found table entry, based on the action of the flow table modification information. When no matched table entry is found in the L3 flow table, a message indicating that the flow table does not exist, is fed back to the openflow controller.

In step 307, it is judged whether the keyword fields are merely matched with an MPLS basic service. If yes, step 308 is performed; otherwise, step 309 is performed.

In step 308, the flow table modification information is issued, as a table entry, to the MPLS flow table.

Specially, table look-up is performed in the MPLS flow table based on the keyword fields of the flow table modification information. When a matched table entry is found in the MPLS flow table, an operation including addition, deletion or modification, is performed on the found table entry, based on the action of the flow table modification information. When no matched table entry is found in the MPLS flow table, a message indicating that the flow table does not exist, is fed back to the openflow controller.

In step 309, it is judged whether the keyword fields are matched with all the keywords. If yes, step 310 is performed; otherwise, step 311 is performed.

In step 310, the flow table modification information is issued, as a table entry, to the precise matching flow table.

Specially, table look-up is performed in the precise matching flow table based on the keyword fields of the flow table modification information. When a matched table entry is found in the precise matching flow table, an operation including addition, deletion or modification, is performed on the found table entry, based on the action of the flow table modification information. When no matched table entry is found in the precise matching flow table, a message indicating that the flow table does not exist, is fed back to the openflow controller.

In step 311, the flow table modification information is issued, as a table entry, to the Wildcard flow table.

Specially, table look-up is performed in the Wildcard flow table based on the keyword fields of the flow table modification information. When a matched table entry is found in the Wildcard flow table, an operation including addition, deletion or modification, is performed on the found table entry, based on the action of the flow table modification information. When no matched table entry is found in the Wildcard flow table, a message indicating that the flow table does not exist, is fed back to the openflow controller.

In step 103, at a forwarding plane, the precise matching flow table is looked up for a matched table entry, by using all keywords in a packet. When the matched table entry is found, the packet is processed according to an action of the matched table entry. When no matched table entry is found, keywords of different keyword fields of the packet are extracted to look up the at least one classification matching flow table in parallel. A table entry of the precise matching flow table is dynamically established based on a look-up result of the at least one classification matching flow table. The packet is processed according to an action of the dynamically established table entry.

In this step, the dynamically establishing a table entry of the precise matching flow table based on a look-up result of the at least one classification matching flow table, may include the following steps. The action of the matched table entry found in the at least one classification matching flow table is set into an action set of a flow table forwarding process. The action set of the flow table forwarding process and all keywords in the packet, are taken as one table entry of the precise matching flow table. A "dynamic table entry" tag is set for the table entry. A generation time stamp table of the table entry is recorded. An aging time of the table entry is set to be a minimum aging time of a table entry during the table look-up.

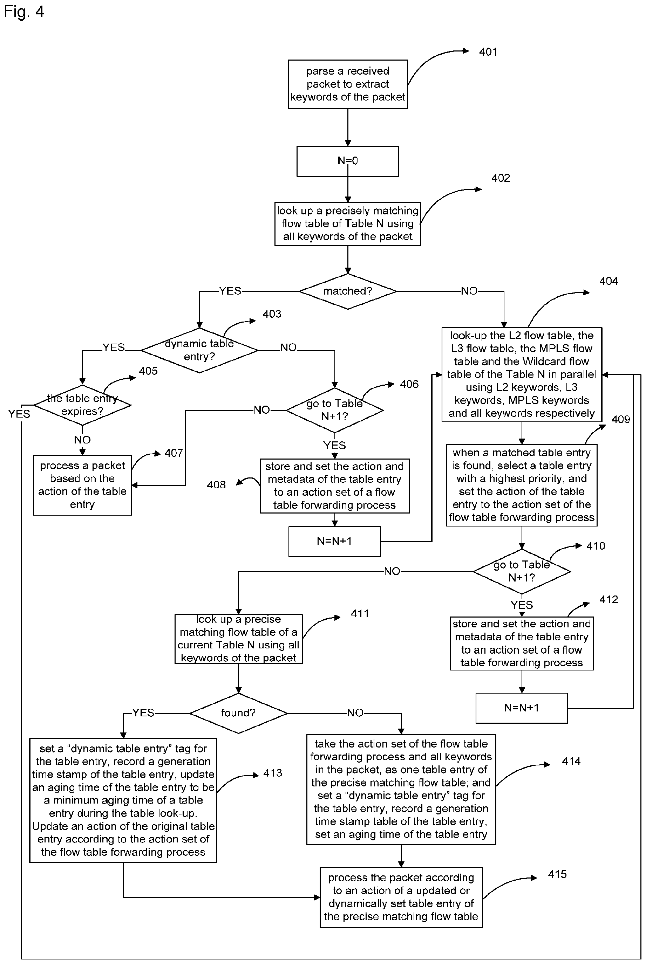

As shown in Fig. 4, specially, this step include the following steps.

In step 401, a received packet is parsed to extract all keywords of the packet according to a definition of the openflow 1.x protocol.

In step 402, a precise matching flow table of Table N (N = 0) is looked up using all extracted keywords When a matched table entry is found, step 403 is performed. When no matched entry is found, step 404 is performed.

In step 403, it is judged whether the table entry is a dynamic table entry. If the table entry is a dynamic table entry, step 405 is performed. If the table entry is not a dynamic table entry, step 406 is performed.

In step 404, the L2 flow table, the L3 flow table, the MPLS flow table and the Wildcard flow table of the Table N are looked up in parallel using L2 keywords, L3 keywords, MPLS keywords and all keywords respectively, and then step 409 is performed.

In step 405, it is judged whether the table entry expires. If the table entry expires, the step 404 is performed. If the table entry does not expire, step 407 is performed.

In step 406, it is judged whether there is, in the table entry, a flag "goto Table N+1 " indicating jumping to table N = N + 1. If no, step 407 is performed. Otherwise, step 408 is performed.

In step 407, the packet is processed based on the action of the table entry, which is exactly in conformity with specifications defined by the openflow 1.x. The packet is modified according to a configured action, and then forwarded, discarded or uploaded to the controller according to the action. Then, the process is ended.

In step 408, the action and metadata of the table entry are stored and set to an action set of a flow table forwarding process. The step 404 is performed according to the metadata and keywords of the table entry, turning to a flow table of a next stage, i.e., Table N (N= N+1), for table look-up.

In step 409, when a matched table entry is found, a table entry with a highest priority is selected, and the action of the table entry is set to the action set of the flow table forwarding process. When no matched table entry is found, the packet is processed according to a default action.

In step 410, it is judged whether there is, in the table entry with the highest priority, a flag "goto Table N+1" indicating jumping to Table N+1 (N = N + 1). If no, step 411 is performed. Otherwise, step 412 is performed.

In step 411, table look-up is performed in a precise matching flow table of current Table N using all keywords of the packet. When a matched table entry is found, step 413 is performed. When no matched entry is found, step 414 is performed.

In step 412, the action and metadata of the table entry are stored and set to an action set of a flow table forwarding process. The step 404 is performed according to the metadata and keywords of the table entry, turning to a flow table of a next stage, i.e., Table N (N=N+1), for table look-up.

In step 413, a "dynamic table entry" tag is set for the table entry, a generation time stamp of the table entry is recorded, and an aging time of the table entry is updated to be a minimum aging time of a table entry during the table look-up. An action of the original table entry is updated according to the action set of the flow table forwarding process, and the step 415 is performed.

In step 414, the action set of the flow table forwarding process and all keywords in the packet, are taken as one table entry of the precise matching flow table, a "dynamic table entry" tag is set for the table entry, a generation time stamp table of the table entry is recorded, an aging time of the table entry is set to be a minimum aging time of a table entry during the table look-up, and then a step 415 is performed.

In step 415, the packet is processed according to an action of an updated or dynamically set table entry of the precise matching flow table.

Herein, in step 103, the aging and updating of the dynamical table entry of the precise matching flow table is further performed.

After the openflow agent of a packet forwarding device receives flow table modification information issued by the openflow controller, the openflow agent updates the precise matching flow table and at least one classification matching flow table of the flow tables according to a method implemented in the control plane, without updating a dynamic table entry of the precise matching flow table. When each dynamic table entry is created at a forwarding plane, a creation time stamp is recorded. After a packet is received, in case that a difference between a current time stamp and the creation time stamp exceeds an expiration time, it is assumed that the dynamic table entry expires and establishment of the dynamic table entry is re-triggered, so as to update the dynamic table entry. In order to increase the updating response speed, the expiration time is generally defined in orders of seconds or hundreds of milliseconds.

The aging principle of a dynamic table entry is as same as that of the ordinary openflow table. Regarding the aging of the dynamic table entry, its difference from that of the ordinary openflow table lies in that, the aging time of the dynamic table entry is not configured by the openflow controller, but is set, when the dynamic table entry is created or updated, to be the minimum aging time during the whole table look-up process.

After the step 103, when the packet is forwarded, table look-up can be performed directly in the precise matching flow table and the packet can be forwarded by performing table look-up just once. Furthermore, the precise matching flow table can be implemented in the DRAM, and is not necessarily implemented in a TCAM chip, which saves the TCAM chip resources.

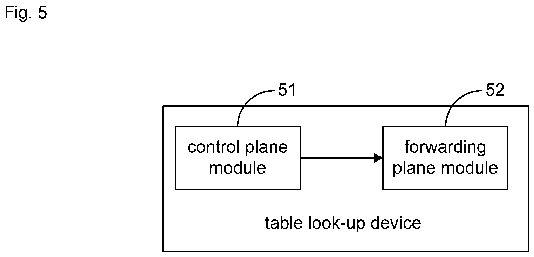

Based on the above method, the disclosure further provides a table look-up device for an openflow table. As shown in Fig. 5, the device includes a control plane module 51, and a forwarding plane module 52.

The control plane module 51 is arranged to divide, based on keyword fields, openflow tables of each level into a precise matching flow table and at least one classification matching flow table; receive flow table configuration information issued by an openflow controller; and issue, based on keyword fields of the flow table configuration information, the flow table configuration information as a table entry into the precise matching flow table or the classification matching flow table.

The forwarding plane module 52 is arranged to look up the precise matching flow table for a matched table entry, by using all keywords in a packet; when the matched table entry is found, process the packet according to an action of the matched table entry; and when the matched table entry is not found, extract keywords of different keyword fields of the packet to look up the at least one classification matching flow table in parallel, dynamically establish a table entry of the precise matching flow table based on a look-up result of the at least one classification matching flow table, and process the packet according to an action of the dynamically established table entry.

The at least one classification matching flow table may include: a layer 2 (L2) flow table, a layer 3 (L3) flow table, a Multiple Protocol Label Switch (MPLS) flow table, a Wildcard flow table and the like.

The L2 flow table stores flow table configuration information related to L2 basic services. The look-up keywords of table entries include a VLAN ID, a source MAC, a destination MAC and the like.

The L3 flow table stores flow table configuration information related to L3 basic services. The look-up keywords of table entries include a VLAN ID, a source IP, a destination IP and the like.

The MPLS flow table stores flow table configuration information related to MPLS basic services. The look-up keywords of table entries include an MPLS mask.

The precise matching flow table stores related flow table configuration information precisely matched with all keyword table entries defined by the openflow 1.x protocol.

The precise matching flow table stores, in a DRAM, the issued flow table configuration information and the dynamically established table entries simultaneously, in a form of an HASH table. In practice, the number of the dynamically established table entries will be huge, and the precise matching flow table generally requires defining a table with not less than 4M items.

The Wildcard flow table stores flow table configuration information other than the above-described four types of flow tables. The Wildcard flow table takes all keywords defined by the openflow 1.x protocol to perform non-precise matching. The mask may be configured in any field, and may be stored in the TCAM.

An openflow agent in the control plane module 51 receives the flow table configuration information issued by the openflow controller. The openflow agent issues flow table configuration information with keyword fields precisely matched with all keywords, as a table entry of the precise matching flow table, to the precise matching flow table; issues flow table configuration information with keyword fields merely matched with an L2 basic service, as a table entry of the L2 flow table, to the L2 flow table; issues flow table configuration information with keyword fields merely matched with an L3 basic service, as a table entry of the L3 flow table, to the L3 flow table; issues flow table configuration information with keyword fields merely matched with an MPLS service, as a table entry of the MPLS flow table, to the MPLS flow table; and issues other flow table configuration information as a table entry of the Wildcard flow table, to the Wildcard flow table.

The forwarding plane module 52 is further arranged to, when no matched table entry is found, extract keywords of different keyword fields of the packet to look up the at least one classification matching flow table in parallel; set the action of the matched table entry found in the at least one classification matching flow table into an action set of a flow table forwarding process; take the action set of the flow table forwarding process and all keywords in the packet, as one table entry of the precise matching flow table; and set a "dynamic table entry" tag for the table entry, record a generation time stamp of the table entry, and set an aging time of the table entry. The aging time of the table entry is set to be a minimum aging time of a table entry during the table look-up.

Furthermore, the forwarding plane module 52 is further arranged to age and update the dynamic table entry of the precise matching flow table.

When a forwarding plane module 52 receives a packet, in case that a difference between a current time stamp and the creation time stamp exceeds an expiration time, it is assumed that the dynamic table entry expires and establishment of the dynamic table entry is re-triggered, so as to update the dynamic table entry. When the dynamic table entry is created or updated, the aging time of the dynamic table entry can be assumed to be the minimum aging time of a table entry during the table look-up.

According to the embodiment of the disclosure, the table look-up method for the openflow table, when implemented in a form of a software functional module and sold or used as a standalone product may be stored in a readable storage medium. In view of this, essence or the contribution to the related art of the technical solutions of the embodiments of the disclosure may be embodied in a software product. The software product is stored in a storage medium and includes several instructions which cause a computer device (may be a personal computer, a server, a network device or the like) to perform some or all of the method according to an embodiment of the disclosure. The storage medium may include an USB driver, a removable hard disk, a Read-Only Memory (ROM), a magnetic disk or an optical disk or other mediums which can store program codes. Therefore, the embodiment of the disclosure is not limited to any specific combination of software and hardware.

Correspondingly, an embodiment of the disclosure provides a computer storage medium storing computer programs. The computer programs are adapted to perform any one of the table look-up methods of the openflow table according to the embodiments of the disclosure.

What are described above are merely preferred embodiments of the disclosure, and are not intended to limit the protection scope of the disclosure. Any modifications, equivalent replacements and improvements made within the principle of the disclosure may fall within the protection scope of the disclosure.

### INDUSTRIAL APPLICABILITY

According to the embodiments of the disclosure, at the control plane, openflow tables of each level are divided into a precise matching flow table and at least one classification matching flow table based on keyword fields. The flow table configuration information is issued as a table entry into the precise matching flow table or the classification matching flow table based on keyword fields of the flow table configuration information. At a forwarding plane, the precise matching flow table is looked up for a matched table entry, by using all keywords in a packet. When the matched table entry is found, the packet is processed according to an action of the matched table entry. When the matched table entry is not found, keywords of different keyword fields of the packet are extracted to look up the at least one classification matching flow table in parallel. A table entry of the precise matching flow table is dynamically established, and the packet is processed. In this way, when the packet is forwarded subsequently, the packet can be forwarded by directly looking up the precise matching flow table just once. Furthermore, the precise matching flow table may be implemented in a DRAM, and is not necessarily implemented in a TCAM chip, which saves the TCAM chip resources.

## Claims

1. A table look-up method for an openflow table, the method comprising:
at a control plane,
dividing, based on keyword fields, openflow tables of each level into a precise matching flow table and at least one classification matching flow table;
receiving flow table configuration information issued by an openflow controller; and
issuing, based on keyword fields of the flow table configuration information, the flow table configuration information as a table entry into the precise matching flow table or the classification matching flow table; and
at a forwarding plane,
looking up the precise matching flow table for a matched table entry, by using all keywords in a packet;
when the matched table entry is found, processing the packet according to an action of the matched table entry; and
when the matched table entry is not found, extracting keywords of different keyword fields of the packet to look up the at least one classification matching flow table in parallel, dynamically establishing a table entry of the precise matching flow table based on a look-up result of the at least one classification matching flow table, and processing the packet according to an action of the dynamically established table entry.

2. The table look-up method according to claim 1, wherein the at least one classification matching flow table comprises: a layer 2 (L2) flow table, a layer 3 (L3) flow table, a Multiple Protocol Label Switch (MPLS) flow table and a Wildcard flow table.

3. The table look-up method according to claim 2, wherein the issuing, based on keyword fields of the flow table configuration information, the flow table configuration information as a table entry into the precise matching flow table or the classification matching flow table, comprises:
issuing flow table configuration information with keyword fields precisely matched with all keywords, as a table entry of the precise matching flow table, into the precise matching flow table;
issuing flow table configuration information with keyword fields merely matched with an L2 basic service, as a table entry of the L2 flow table, to the L2 flow table;
issuing flow table configuration information with keyword fields merely matched with an L3 basic service, as a table entry of the L3 flow table, to the L3 flow table;
issuing flow table configuration information with keyword fields merely matched with an MPLS service, as a table entry of the MPLS flow table, to the MPLS flow table; and
issuing other flow table configuration information as a table entry of the Wildcard flow table, to the Wildcard flow table.

4. The table look-up method according to claim 3, wherein the dynamically establishing a table entry of the precise matching flow table based on a look-up result of the at least one classification matching flow table, comprises:
setting the action of the matched table entry found in the at least one classification matching flow table into an action set of a flow table forwarding process;
taking the action set of the flow table forwarding process and all keywords in the packet, as one table entry of the precise matching flow table; and
setting a "dynamic table entry" tag for the table entry, recording a generation time stamp of the table entry, and setting an aging time of the table entry.

5. The table look-up method according to claim 4, wherein the method further comprises: aging and updating the dynamic table entry of the precise matching flow table.

6. A table look-up device for an openflow table, the device comprising: a control plane module, and a forwarding plane module; wherein
the control plane module is arranged to divide, based on keyword fields, openflow tables of each level into a precise matching flow table and at least one classification matching flow table; receive flow table configuration information issued by an openflow controller; and issue, based on keyword fields of the flow table configuration information, the flow table configuration information as a table entry into the precise matching flow table or the classification matching flow table; and
the forwarding plane module is arranged to look up the precise matching flow table for a matched table entry, by using all keywords in a packet; when the matched table entry is found, process the packet according to an action of the matched table entry; and when the matched table entry is not found, extract keywords of different keyword fields of the packet to look up the at least one classification matching flow table in parallel, dynamically establish a table entry of the precise matching flow table based on a look-up result of the at least one classification matching flow table, and process the packet according to an action of the dynamically established table entry.

7. The table look-up device according to claim 6, wherein the at least one classification matching flow table comprises: a layer 2 (L2) flow table, a layer 3 (L3) flow table, a Multiple Protocol Label Switch (MPLS) flow table and a Wildcard flow table.

8. The table look-up device according to claim 7, wherein the control plane module is further arranged to issue flow table configuration information with keyword fields precisely matched with all keywords, as a table entry of the precise matching flow table, to the precise matching flow table; issue flow table configuration information with keyword fields merely matched with an L2 basic service, as a table entry of the L2 flow table, to the L2 flow table; issue flow table configuration information with keyword fields merely matched with an L3 basic service, as a table entry of the L3 flow table, to the L3 flow table; issue flow table configuration information with keyword fields merely matched with an MPLS service, as a table entry of the MPLS flow table, to the MPLS flow table; and issue other flow table configuration information as a table entry of the Wildcard flow table, to the Wildcard flow table.

9. The table look-up device according to claim 8, wherein the forwarding plane module is further arranged to, when the matched table entry is not found, extract keywords of different keyword fields of the packet to look up the at least one classification matching flow table in parallel; set the action of the matched table entry found in the at least one classification matching flow table into an action set of a flow table forwarding process; take the action set of the flow table forwarding process and all keywords in the packet, as one table entry of the precise matching flow table; and set a "dynamic table entry" tag for the table entry, record a generation time stamp of the table entry, and set an aging time of the table entry.

10. The table look-up device according to claim 9, wherein the forwarding plane module is further arranged to age and update the dynamic table entry of the precise matching flow table.

11. A computer storage medium storing computer programs adapted to perform the table look-up method for the openflow table according to any one of claims 1 to 5.
